# EUROPEAN PATENT SPECIFICATION

(11) **EP 0 968 139 B1**
(45) Date of publication and mention of the grant of the patent: **11.02.2004**
(21) Application number: 98951625.7
(22) Date of filing: 13.11.1998
(51) Int. Cl.: C03B 11/00

(54) **METHOD OF MANUFACTURING A HOLLOW TV PRODUCT OF GLASS**
VERFAHREN ZUM HERSTELLEN EINES HOHLEN TV PRODUKTS AUS GLAS
PROCEDE DE FABRICATION D'UN ELEMENT DE TELEVISION EN VERRE

(30) Priority: 26.11.1997 EP 97203697
(43) Date of publication of application: 05.01.2000
(73) Proprietor: Koninklijke Philips Electronics N.V., 5621 BA Eindhoven (NL)
(72) Inventor: SELTEN, Wilhelmus, N., M., NL-5656 AA Eindhoven (NL)
(74) Representative: Bos, Kornelis Sjoerd
(86) International application number: PCT/IB1998/001809
(87) International publication number: WO 1999/026888

(56) References cited:
- GB-A- 1 483 683
- GB-A- 2 213 143
- US-A- 5 192 353
- WPI/DERWENT'S ABSTRACT, Accession Number 96-217060, Week 9622; & JP 8081230 A (NIPPON ELECTRIC GLASS CO) 26 March 1996; & PATENT ABSTRACTS OF JAPAN, Vol. 096, No. 007, 31 July 1996; & JP 8081230 A.

## Description

The invention relates to the manufacture of a hollow TV product of glass, such as a TV screen and a TV cone, comprising the following steps:
- introducing a blob of a viscous glass at an increased temperature into a mould,
- pressing the product by pressing a plunger with a required pressure into the viscous glass so as to obtain the desired shape,
- cooling the product to room temperature. Such a method is known from GB-A-1 483 683. In the known method the plunger remains in contact with the product until the glass has hardened sufficiently for the product to be removed from the mould.

In pressing large hollow glass products, such as a TV screen, it is very important that the cooling process during and after pressing proceeds in a controlled manner. For many years it has been standard practice in pressing TV screens and cones to reduce the pressing time, that is the time during which the plunger contacts the glass, to the minimum. Immediately after the plunger has been pressed into the viscous glass (approximately 1000 °C), heat originating from the glass is dissipated via the plunger. So much heat has to be dissipated at once that the contact temperature at the contact face between the plunger and the glass is lower than the so-called sticking temperature, that is the temperature above which the glass sticks to the plunger. This temperature is approximately 620 °C. If, however, the temperature at the surface of the plunger is too low, there is the risk of excessive cooling of the glass at the surface, thus causing too large stresses in the glass, which may lead to cracks or at least to unacceptable damage to the surface. This so-called strain point is at approximately 450 °C. Consequently, the actual pressing process must take place at a plunger temperature ranging between 620 °C and 450 °C. Therefore, the plunger is properly cooled in a controlled manner. Many methods of cooling and, if necessary, even heating the plunger are known. Since a glass product, such as a TV screen, does not only have a front panel but also upright side walls, whereby the thickness of the glass generally varies substantially, the amount of heat to be dissipated per surface unit differs as a function of this wall thickness. Consequently, the above has led, in practice, to as short as possible pressing times. The products are generally pressed on a so-called carousel press and cooled by means of an air stream. Dependent upon the size of the screen, the pressing time for TV screens ranges from approximately 3 to 12 seconds. A short pressing time has the advantage of an increased production. However, there is the risk that certain parts of the product still are so hot that after removal of the plunger the product may be subject to a slight local deformation, caused by non-uniform shrinkage during further cooling and slumping of the still slightly viscous product particularly because the product is not isothermal. At this stage, the core of the product still has a temperature in the range from 900 °C to 1000 °C, which corresponds to a viscosity of approximately 10^{3.5} Pa.s. Further cooling generally takes place by means of forced air cooling. Apart from cooling the product, said forced air cooling also serves to shape the partly still viscous product by the static pressure exerted by said air cooling. TV screens require a high degree of accuracy and dimensional inaccuracies or other irregularities are unacceptable, so that either an aftertreatment must take place or the screen is completely rejected.

It is an object of the invention to improve the pressing process in the manufacture of large hollow glass products, such as TV screens or TV cones, in such a manner that after pressing and cooling, the shape of the resultant product is as identical as possible to the desired shape and the wall surface of the product has the desired stress distribution.

To achieve this, the method is characterized in that in the manufacture the contact temperature of the plunger is controlled to a level at which no substantial stresses are produced in the product, the plunger remains in contact with the product until said product is dimensionally stable, and the ratio between the time that the plunger is in contact with the product and the time that the product is in the mould is greater than 0.5 and smaller than 1.
In other words:

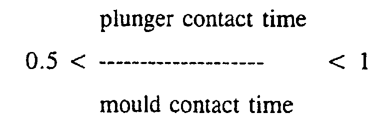

It has surprisingly been found that the time during which a plunger can be held in the still viscous glass, without causing cracks or damage to the glass surface caused by too high a cooling rate, is much longer than hitherto customary. This is possible by accurately setting the contact temperature to a level at which no great stresses are caused in the glass. In fact, this method enables a calibrated product to be obtained, that is, the shape of the product is exactly the negative of the shape of the plunger and the mould. In the hitherto customary pressing process for TV products, the above-mentioned ratio is approximately 0.10-0.15. In the pressing process in accordance with the invention, a much greater ratio causes the temperature difference between the walls and the core to be much smaller the instant the glass is released by the tool. After the pressing operation, uncontrolled changes in shape will no longer occur in the subsequent unforced cooling process. Cooling by means of a forced air stream is no longer necessary, so that contamination of the glass surface by particles which are always present in the air stream does not occur anymore. In accordance with the novel method, the pressing times for TV screens range, dependent upon the size of the screen, from approximately 20 to approximately 200 seconds. It is very important that during this longer pressing time, a highly controlled heat dissipation from both sides of the product takes place. That is to say, the heat flow from the product must be as uniform as possible throughout the inner and outer surfaces of the product and correspond to the dissipation capacity of the glass. The desired stress, for example a uniform compressive stress throughout the surface of the product, can be achieved by setting the temperature of the surface of the plunger contacting the glass to the proper value. As a result, cooling of the plunger plays an important part. As mentioned hereinabove, many methods of cooling the plunger are known. These methods not only relate to cooling but also, if necessary, to heating of the plunger. If necessary, also the mould may be cooled/heated. The manner in which cooling/heating must take place depends, of course, to a substantial degree on the shape of the product itself. To carry out the above process, the cooling capacity of the tool must be set so as to be place-dependent. This serves to cause the temperature gradient in the product during and after pressing to be as symmetrical as possible across the thickness.

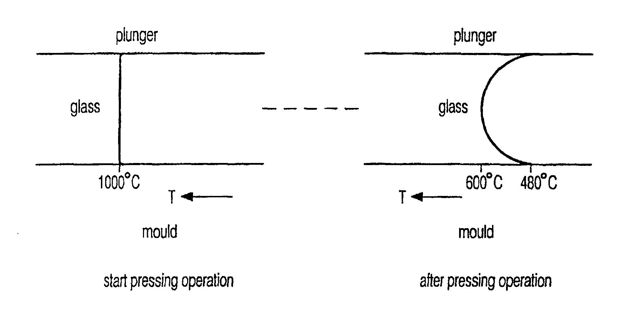

Hereinbelow, an example is given of a TV-screen pressing operation: a blob of glass is introduced into a mould. The glass has a temperature of approximately 1000 °C, which in the case of TV glass corresponds to a viscosity of approximately 10³ Pa.s. The plunger has a temperature of approximately 480 °C. As soon as the plunger is pressed into the glass, heat is extracted from the glass and the glass surface assumes a temperature of approximately 520 °C. This temperature is the contact temperature. Subsequently, the glass is pressed-out, that is, distributed between the mould and the plunger to obtain the desired shape of the product, whereby heat from the glass is dissipated. The plunger stays in contact with the product until said product is dimensionally stable, that is manageable. The temperature of the walls, both on the side of the plunger and on the side of the mould, has then decreased to approximately 480 °C.
By way of illustration, the temperature distribution across the thickness of the glass at the start of the pressing operation and immediately after the pressing operation is shown in the figure.

## Claims

1. A method of manufacturing a hollow TV product of glass, such as a TV screen and a TV cone, comprising the following steps:
- introducing a blob of a viscous glass at an increased temperature into a mould,
- pressing the product by pressing a plunger with a required pressure into the viscous glass so as to obtain the desired shape,
- cooling the product to room temperature, **characterized in that** in the manufacture, the plunger remains in contact with the product during a period of time which is between 50% and 100% of the time that the product is in the mould, but at least until the product is dimensionally stable, the contact temperature of the plunger being controlled to a level at which no substantial stresses are produced in the product.

2. A method as claimed in claim 1, in which for the cooling step unforced cooling is utilized.

3. A method as claimed in claim 1, wherein the cooling capacity of the pressing tool is locally set to cause the temperature gradient in the product to be substantially symmetrical across its thickness.

4. A method as claimed in claim 1, wherein the temperature of the contact surface of the plunger is set to produce a uniform compressive stress throughout the surface of the product.

## Patentansprüche

1. Verfahren zum Herstellen eines TV-Produkts aus Glas, wie eines Fernsehschirms und eines Fernsehkonus, wobei dieses Verfahren die nachfolgenden Verfahrensschritte umfasst:
- das Einführen eines Tropfens aus einem viskosen Glas mit einer höheren Temperatur in eine Form,
- das Pressen des Produktes dadurch, dass ein Stempel mit einem erforderlichen Druck in das viskose Glas gepresst wird, damit die gewünschte Form erhalten wird,
- das Kühlen des Produktes auf Raumtemperatur, **dadurch gekennzeichnet, dass** der Stempel bei der Herstellung während einer Periode, die zwischen 50% und 100% der Zeit, dass das Produkt sich in der Form befindet, aber wenigstens bis das Produkt abmessungsmäßig stabil ist, mit dem Produkt in Kontakt ist, wobei die Kontakttemperatur des Stempels auf einen Pegel gesteuert wird, auf dem keine wesentlichen Spannungen in dem Produkt erzeugt werden.

2. Verfahren nach Anspruch 1, wobei zum Kühlen nicht forcierte Kühlung angewandt wird.

3. Verfahren nach Anspruch 1, wobei die Kühlkapazität des Presswerkzeugs örtlich derart eingestellt wird, dass der Temperaturgradient in dem Produkt über die Dicke im Wesentlichen symmetrisch ist.

4. Verfahren nach Anspruch 1, wobei die Temperatur der Kontaktfläche des Stempels derart eingestellt wird, dass über die Oberfläche des Produktes eine einheitliche Druckspannung erzeugt wird.

## Revendications

1. Procédé de fabrication d'un produit de télévision creux en verre, tel qu'un écran de télévision et un cône de télévision, comprenant les étapes suivantes consistant à:
- introduire une portion de verre visqueux à une température élevée dans un moule,
- presser le produit en pressant un plongeur avec une pression requise dans le verre visqueux de manière à obtenir la forme souhaitée,
- refroidir le produit à la température ambiante, **caractérisé en ce que** pendant la fabrication le plongeur reste en contact avec le produit pendant une période de temps qui se situe entre 50% et 100% du temps où le produit est présent dans le moule, mais au moins jusqu'à ce que le produit soit dimensionnellement stable, la température de contact du plongeur étant commandée à un niveau auquel pas de contraintes substantielles ne sont engendrées dans le produit.

2. Procédé selon la revendication 1, dans lequel pour l'étape de refroidissement il est utilisé un refroidissement non forcé.

3. Procédé selon la revendication 1, dans lequel la capacité de refroidissement de l'outil de pressage est réglée localement pour effectuer que le gradient de température dans le produit est sensiblement symétrique à travers son épaisseur.

4. Procédé selon la revendication 1, dans lequel la température de la surface de contact du plongeur est réglée à produire une contrainte de compression uniforme sur toute la surface du produit.
